(19)

Europäisches
Patentamt
European
Patent Office
Office européen
des brevets

(11) **EP 2 293 252 A1**

(12) **EUROPEAN PATENT APPLICATION**

(43) Date of publication:
**09.03.2011 Bulletin 2011/10**

(51) Int Cl.:
***G06T 17/05*** [(2011.01)]      ***G09B 29/10*** [(2006.01)]

(21) Application number: **10174525.5**

(22) Date of filing: **05.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **05.08.2003  IT MI20031614
16.04.2004  IT MI20040757**

(62) Document number(s) of the earlier application(s) in accordance with Art. 76 EPC:
**04018575.3 / 1 505 547**

(71) Applicant: **GEOTECHNOS S.R.L.
34147 Trieste (TS) (IT)**

(72) Inventor: **Righetti, Giovanni
61010 Tavullia (Pesaro e Urbino) (IT)**

(74) Representative: **Botti, Mario
Botti & Ferrari S.r.l.
Via Cappellini, 11
20124 Milano (IT)**

Remarks:
This application was filed on 30-08-2010 as a divisional application to the application mentioned under INID code 62.

(54) **Method to analyse the acoustic pollution**

(57)    The invention relates to a method to analyse the acoustic pollution generated by the vehicular traffic along the road network comprising the steps of taking into account a digital model of the land; calculating the intensity of sound for points of said digital model of the land; surveying isophonic curves.

FIGURE 10

EP 2 293 252 A1

**Description**

Field of application

The present invention relates to a method to analyse the acoustic pollution generated by the vehicular traffic along a road network.

Prior art

At present, plani-altimetric surveys of the land are mainly carried out with total earth station.

Current procedures provide that, for the good graphic representation of the land, the topographer surveys the topographic coordinates and the altitude of only the points being considered meaningful.

The earth survey is conditioned by the characteristics of the land under examination and by the accessibility thereof. If the geological conditions do not allow the staff to reach the point to be surveyed, the survey cannot be carried out and it cannot be made available for the design, causing a loss of accuracy in the resulting graphic prints-out.

Through the surveyed points a digital representation of the land called DTM (Digital Terrain Model) follows.

The DTM represents the elevation of the land and it can be generated starting from elevated points or from contour lines. It is generally used for analysis of visibility, of inclination and of exposition, longitudinal sections or cliviometries.

In the case of land surveys the DTM is generated through an interpolation technique among the elevated points and it depends on the accuracy of the acquisition and generation steps of the grid and extraction of information.

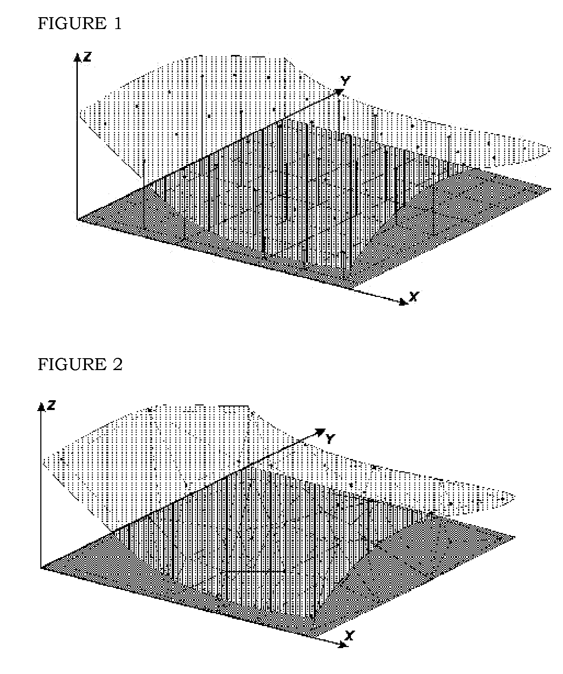

The DTM is based on XYZ coordinates, being XY the location of the point on the bidimentional surface and Z the value of interest of the phenomenon. The point grids can be structured on regular rectangles (as in Figure 1), in the case, however sporadic, when the surveys coincide with the rectangle vertexes.

For optimising the resulting effect the surveyed points must be chosen with accuracy according to the different conformity of the area, limiting, in the meantime, the information redundancy in flat regions (in other words a compromise between the accuracy and the redundancy, which, in terms of calculation, results in a shorter computational time).

Once the solution is defined, some interpolation criteria are chosen, among the best known: the "simple mean" criterion, where the interpolation ordinate is derived as mean of the ordinates of the eight closest points or the "weighted mean" criterion, where $f(x,y) = \dfrac{\left(\sum_1^8 W(x,y)\right)z_i}{\left(\sum_1^8 W(x,y)\right)}$ is the interpolation ordinate and W is the inverse of the distance between the ordinates of x and y.

An efficient structuring method of the grid is based on irregular triangle networks called TIN (Triangular Irregular Network) and defined as triangle grids or irregular tetrahedron cells (in the case of tridimensional representations, Figure 2).

TIN are particularly used for graphic representations of plani-altimetric surveys. Each irregular triangle must be structured so that the circle contained therein does not contain any other point. The triangles thus generated are characterised by ideal angles for the rendering instruments.

The graphic print-out based on the TIN has meaningful variations depending on the dimensions of the triangles (for the poor number of the surveyed data) and it can lead to subsequent visualisation anomalies. The accuracy of this step thus depends both on the precision and on the number of surveyed points.

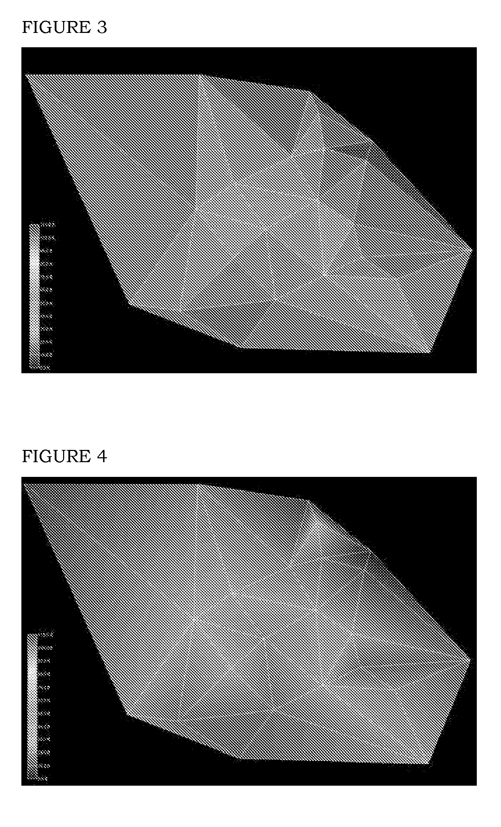

For obviating the anomalies generated by the irregular triangles of wide dimension it is necessary to increase the sampling points, by dividing the already defined triangles into uniformly distributed triangles (Figures 3 and 4).

It is however to be recalled that an accurate survey is very difficult to be realised even if having complex devices such as a laser scanner since the processing of the surveyed data depends on the software used for the analysis, the division and the interpolation of the elevated points.

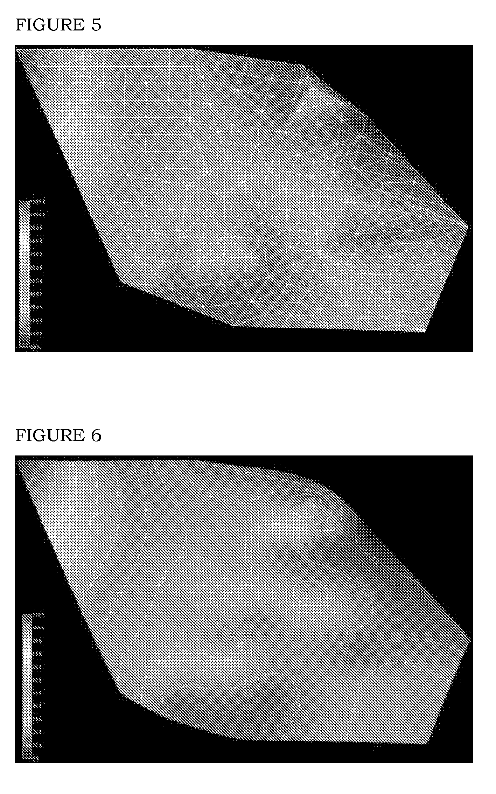

For limiting visualisation anomalies there exist several methods which consist in endowing the irregular faces of the network with colours. A known method is that of endowing with the colour according to the height of the surveyed point and of interpolating the colours of the RGB scale among the surveyed points, as shown by the shades of grey in Figure 5. Figure 6 finally shows the addition of contour lines.

The accuracy of the final representation of the survey thus depends, in a remarkable way, on the number and on the precision of the sampling but also on the used interpolation techniques.

Therefore, also in the case wherein innovative survey instruments are used, the interpretation steps of the acquired points and the difficulty of separating the elevated points relative to the land from those belonging to works, buildings, vegetation and anything else which is placed there-above, keep being delicate.

Similarly, the pick-up and the processing of data concerning the road network of a land area for the formation of a "Road Registry" is sensitive to the above described factors. The "Road Registry" represents an inventory of all public roads on the national territory. Fundamental aim of such inventory is that of defining the consistency of the national road network in a compatible and integrable way with the most known land and estate Registries, at least in a mean and long run perspective.

Moreover, it would be desirable that the authorities owning the roads take care, during the surveying step of the data necessary for the constitution of the Registry, also of the survey of other easily acquirable elements which could be useful for the preparation of a Road Information System (RIS) of the integrated type.

In this context, it is useful to make reference to a Decree of the Italian Public Work Ministry which, addressing to all the authorities owning public roads and more precisely: ANAS, Concessionary Societies for the Motorways, Regions, Provinces and Municipalities, on June 1, 2001 published the modes of institution and update of a road Registry according to art. 13, paragraph 6 of the law decree April 30, 1992, n. 285 and following modifications.

This Decree provided that for ANAS and Concessionary Societies for the Motorways the relative Registry had to be realised within two years from the coming into effect of the Decree itself; whereas, for the Regions the term of three years has been scheduled within three years and for the Provinces and for the interurban municipal roads, having paved width not lower than 5,50 metres, the term is of four years. The Registry should be ready within five years from the coming into effect of the above Decree also for the interurban municipal roads, in particular for those having paved width lower than 5,50 metres and for paved urban roads.

As for the road axes, the rules impose that they are surveyed as a sequence of points and that for each road element, rectilinear or curvilinear, a sufficient number of points has to be surveyed for deducting the geometry therefrom with a procedure known as "minimal squares". The errors of the flat coordinates of the road axis points must be contained within a metre.

The precision of the geodetic elevation of the points constituting the longitudinal profile with respect to the national altimetric reference must be better than 5,0 metres.

In the determination of the longitudinal profile the relative precision must be such that the maximal error of the inclination is at least 1%, i.e. it must be lower than 10 centimetres if calculated between points being less than 10 metre spaced. As for the cross sections, the maximal error in the cross inclination must e contained in 1/100 or 0.5 centesimal degrees. The error in the measure of the width of the road (carriageway and side) must be contained in the absolute maximal measure of 10 centimetres. The rules also impose that the measure must be provided at any variation of width of the road being higher than the indicated precision. Also for the formation of a Road Registry, thus, such an accurate survey is very difficult to be realised even of having complex devices such as a scanner laser.

The rules also report a series of functional and structural elements which would be inserted in the Road Registry. Hereafter a list of such elements is reported in order to provide a series of useful definitions for the following description:

1. Junction; it normally represents the intersection point of the axes of two road elements.

2. Traffic Area; it represents an area inside of which vehicle movements occur.

3. Road element; it is a linear entity delimited by two junctions singled out by an ordered set of points. It represents, in general, the axis of a road section with single carriageway.

4. Section of the road element; it is a portion or section of the road element.

5. Pavement of the road; it is the typology of the road surface.

6. Road body; it defines the conformation of the road.

7. Bridges, viaducts and subways; they represent intersections with overhead sections.

8. Tunnels and overpasses; they represent intersections with sections being partially hidden to the sight.

9. Roadside dips; they are noteworthy side irregularities.

10. Embankments; as previously they can be noteworthy side irregularities.

11. Protection of the road body; they represent delimitation and protection barriers of the road network.

12. Protection of the surrounding environment; they represent delimitation and protection barriers of the environment bordering on the road.

13. Lightning systems; they are structural elements easy to be identified and classified.

14. Rest areas; functional elements which identify appointed parking areas.

15. Retention devices.

16. Service outbuildings.

17. Hydraulic continuity works; channels, locks, etc..

18. Accesses; entrances and passageways for cars,....

19. Landmarks or kilometric signals; limits of indication signals or land boundaries.

The specific properties of these functional elements are also described by one or more characteristics defined by the national rules.

Also from this list it is easily understood how the variety and multiplicity of situations that can occur in the real road network developed on a predetermined land area tries sorely the human capacities of surveying and managing at best the huge amount of surveyable data by a deep test of the land.

The rules in fact do not suggest any mode on whose basis of which it is possible to design devices or apparatuses which can in some way soften the burden and decrease the costs of the complex realisation step of the Road Registry.

The above described work can thus imply a very burdensome cost in terms of: means and human resources to be dedicated to the survey step, means and human resources to be dedicated to the pick-up and processing of the data as well as means and human resources to be dedicated to the publication of such data for applications of public and/or private interest.

A problem spontaneously arises in fact on how it is possible to survey and manage such a varied and diversified amount of data, even if having a previous organic vision of how to use these data once they are picked up.

In other words, technologies or methods are not available right now which allow to pass, quickly and easily, from the surveyed data to a consultation instrument for the design.

The technical problem underlying the present invention is that of devising a method for picking up and processing data, having such functional characteristics as to allow an integrated management of all the information starting from the initial survey step up to the design step without having to use any specific computer product although treating huge amounts of data.

Such a method should also allow to update or survey ex-novo the topographic situation and the morphology of a predetermined land area in very quick times and with relatively reduced costs overcoming the limits and the drawbacks affecting the currently employed solutions according to the known art.

This method should also provide consultation mechanisms of the above described prints-out in favour of plural professional figures, by using a common access point.

Summary of the invention

The idea underlying the present invention is that of using the most innovative techniques and methods within the land survey field by assisting all the steps of an engineering project applied to the land with instruments being technologically advanced and proportioned however with the need of the single professional figure which participates in the project.

More in particular the steps of land and road network survey, publication of the graphic print-out and consultation thereof need hardware and software supports of different cost and complexity. As it will be seen the consultation instruments will have the possibility of being unburdened (in economical and logic terms) thanks to the centralisation of the visualisation motor on hardware dedicated to the publication, also ensuring the univocality of the project whereon to work.

The hardware and software burden supporting the method should be suitably weighed up so that the complexity of the graphic motor is devolved on a central dedicated computer, ensuring an economical and essential configuration to the peripheral consultation devices.

These latter advantageously use advanced computer technologies such as the ActiveX components for the retrieval of the prints-out representing the land morphology from the main computer. These instruments will also allow the change of the prints-out and the saving thereof in the central computer itself, reducing the cost of the hardware and the need of highly specialised know-how on the peripheral devices.

Moreover, from the processing of the tridimensional models obtained by the laser points and from the treatment of the laser points, the determination will follow of a series of plani-altimetric prints-out (sections, profiles, etc.) which will have the possibility of being published on a network connected server and subsequently consulted and modified.

The characteristics and advantages of the method according to the invention will be apparent from the following description of an embodiment thereof given by way of indicative and non-limiting example with reference to the annexed drawings.

Brief description of the drawings

Figure 1 shows a schematic view of the interpolation between the elevated points in a DTM representation method (Digital Terrain Model);

Figure 2 shows a schematic view of the interpolation between the elevated points in a TIN representation method (Triangular Irregular Network);

Figure 3 shows a schematic view of the base interpolation between the elevated points in a TIN representation method; refining techniques can be applied to the base interpolation as shown in the schematic view of the following figures.

Figure 4 shows a schematic view of the interpolation between the elevated points in the TIN of figure 3 associated with an interpolation of colours in the RGB scale. The example figure represents a surface of 300 metres of longitude and 100 of latitude with sampled points with mutual distance not higher than 10 metres;

Figure 5 shows a schematic view of the interpolation of colours in the RGB scale between the elevated points in the TIN of figure 3 together with the increase of the number of the elevated points;

Figure 6 shows the print-out of the previous figures with the addition of contour lines.

Figure 7 schematises the use of the ActiveX components by client web.

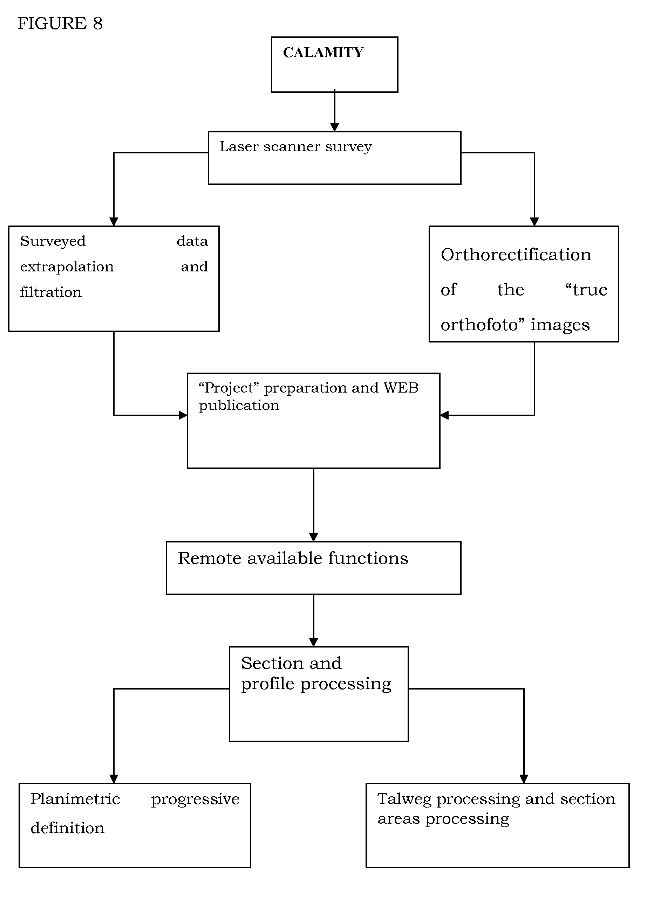

Figure 8 shows a schematic block view of a device system for the activation of the method according to the invention.

Figure 9 shows a graphic interface available on the local computer, by means of which the consultation/change of a saved project, the creation of new projects, layouts, profiles, sections are to be required.

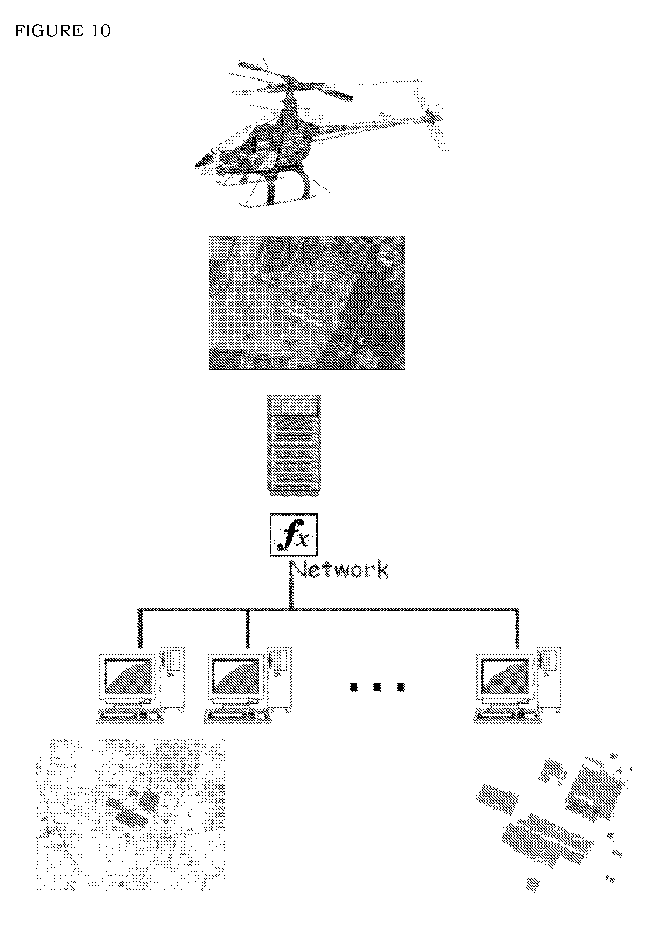

Figure 10 shows a schematic view of the device system for the actuation of the method according to the invention.

Detailed description

The land area interested by the method according to the present invention is framed by a scanner laser mounted on board of an aircraft appointed to a photographic survey from above. The aircraft is generally an helicopter provided with equipment for topographic survey.

The method according to the invention is set out in a sequence of operative steps thus detailed:

A first step provides a topographic survey from the helicopter with high frequency LIDAR technology associated with an inertial system of navigation which allows to obtain high resolution, colour, digital, photographic images.

The LIDAR technology (LIght Detection And Ranging) is an alternative to the traditional acquisition techniques and it consists in the survey by means of scanner laser by exploiting a principle similar to that used by the RADAR. The lidar instrument transmits the light to the surface to be surveyed, it interacts with the destination and it is modified thereby. Part of the light is reflected and transmitted to the laser instrument in response.

Supposing that the light speed is c = 3.0E8 m/s, the echo time of the Lidar can be calculated and as a consequence the land distance can be surveyed:

1 NS = 0,15 m.

1 microsecond = 150 m.

10 microseconds = 1,5 km.

100 microseconds = 15 km.

1 millisecond = 150 km.

There exist different types of Lidar instruments, among the most known, "range finders", "dial", "doppler lidars". The first types of Lidars are the most suitable for the topographic surveys whereas the dial and doppler Lidars are more suitable respectively for measuring the concentrations of polluting molecules in the atmosphere and the speed of a moving body.

The Lidar technology, both aerial and terrestrial, offers a higher precision than the most traditional acquisition photogrammetric methods of the digital models, ensuring the technicians in the field the possibility of determining with sufficient precision the position of a very high number of topographic points with high sampling density.

The surveyor is also released from the accessibility of the land being enabled to use the scanner laser from an helicopter. The results of such surveys are constituted by clouds of irregularly spaced tridimential points concerning any type of object, from the land to the vegetation, to buildings, to motor vehicles. The survey from helicopter also gives back high resolution, digital images of the land (up to 5 cm/pixel).

The photographic images are stored in an electronic file together with the files of laser points with tridimanetional coordinate x-y-z. The acquired photos will be called hereafter with the term "ortophotos", i.e. photos orthogonally referred to the land area.

A second step provides a classification and insulation of the laser points relative to the land and the check of a correct georeference of the ortophotos deriving from the control of the elements deducted from the DTM with the elements visible in the image.

At this point a processing is carried out of the digital model of the land with superimposition, above such model, of the digital images. To this purpose a mesh of irregular triangles is generated and associated point by point with the georeferenced ortophoto by means of a processing program which carries out the connection.

All the data obtained during this superimposition and comparison step are loaded in a single database residing inside an electronic computer which serves as data server.

A photointerpretation step follows by means of video digitisation which confers the real graphic clothing to the TIN network; after vectorial graphic elements are affixed:

- The drawing of the existing or design road axis of project in the case of road works or works of the river axis in the hydraulic arrangement projects.

- The niche profile of the avalanches and of the hydrogeological unbalance phenomena.

- The plant perimeter or space of buildings and existing works.

A subsequent operative step provides a division by road sections of the cartography and of the data processed in the digital format.

Once the above elements are singled out the road will be divided by sections and organised by giving specific tasks to teams of surveying technicians active on the land and provided with portable computers.

Advantageously, according to the invention, an earth survey follows for those objects which cannot be surveyed from the helicopter or which cannot be photointerpreted such as for example: multilevel parkings, allowed running direction; type of traffic island; pavement of the road; tunnels and overpasses; roadside dips; kilometric landmarks; commercial advertising and traffic signals; etc..

Each team of surveying technicians active on the land area is provided with at least one electronic computer of the portable type with relative video screen, for example of the notebook or palmar type, capable of managing the ortophotos, suitably compacted, of the entire surveyed land area and without altering the visual characteristics thereof.

Suitable applicative programs held by said portable electronic computers allow the surveying technicians to visualise the ortophotos and all the photointerpreted prints-out of the area interested by the survey and to easily single out both the geographic references associated with the ortophotos and the structural and functional elements identified by relative graphic symbols.

Moreover, a GPS instrument, connected for example through a serial gate of the portable computer, allows an easy orientation and geographical positioning of the technician according to the photographic image visible on the screen.

Moreover, in case of need, it will be possible to remotely control the paths of the teams or their localisation by means of a "GPS/GSM or GPRS" connection from an operative unit also intended for overseeing the surveying activity.

A suitable dedicated software and a digital photo camera held by each team allows to carry out photographic surveys on the land by downloading in the portable computer, through a USB gate or else, the images relative to the traffic signals and to the commercial advertising.

Moreover, computers also avail themselves of tridimensional digital models of the land under examination in order to process, as field check, sections, profiles and running simulations. For structuring the pick-up of the information in the field a routine of quick preselection of the data to be surveyed is provided.

The set of the vectorial and alphanumeric data picked up by surveying the land are periodically transmitted to the operative unit by means of GPRS communication or through another type of connection of the computers of the surveying technicians towards the central server.

The safety of the data is ensured through the installation of a so called firewall (HW and SW); the daily back up on magnetic support is also carried out.

The method described thus provides a land survey through scanner laser, or similar survey typology, a subsequent post-processing of the digital photos and of the laser points and the subsequent photointerpretation of the digital images with separation of the surveyed points non belonging to the land but to objects, buildings and anything else placed thereon; everything with remote managing modes. The thus surveyed data are completed with surveys carried out in situ by a team of surveying technicians active on the land area and provided with at least one electronic computer and subsequently transmitted to the central computer.

For making the above described surveys usable by more professional figures local devices (client) are used being connected to the main computer through a local network or internet.

The hardware and software burden of the graphic motor is devolved on the main computer; the local devices used for the intranet or internet consultation through Microsoft Internet Explorer browser can maintain an essential configuration thanks to the ActiveX technology.

All the ActiveX or OLE technology, OLE being the name used for indicating the realisation of composed documents, is based on the fundaments provided by COM (Component Object Model).

COM provides all the standards and the rules for the definition of the objects and their interfaces, and it also includes the software necessary for the implementation of the functionalities offered by these technologies. COM is a specification for the construction of code modules (objects) which serves for indicating how other programs can accede to that code.

In other words, it is a binary standard which makes the objects independent from any tool or programming language.

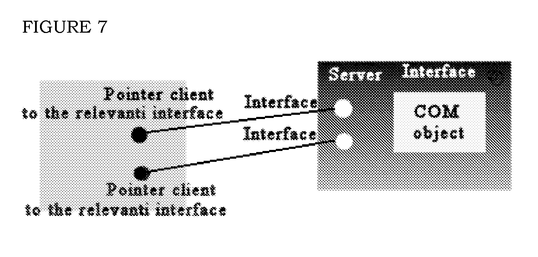

Each COM object supports one or more interfaces, each of them containing a certain number of methods, i.e. functions which perform a specific action and which can be called by the software which is using the COM object (exactly the client of such object, as shown in Figure 7).

The specification for the ActiveX controls exactly does this, i.e. it defines the standards for software components, specifying a set of interfaces which will have to support the COM objects for displaying determined functions.

But the specification of the ActiveX controls also does more: each component must interact with its local device (client), i.e. with the code which uses them, in the most efficient way, then this specification also defines all the rules necessary for the realisation of the so called Control Containers.

A Web browser as Microsoft Internet Explorer is a powerful example of use thereof.

In other words, the proposed method allows, during the consultation step of the graphic prints-out, to unburden the user from software developed and installed ad hoc on the machines, reducing the costs of installation, management and maintenance, besides the costs for training the staff, to the minimum.

The controls are completely stored in the browser system and they are carried out on demand allowing the creation of Web interactive pages which will allow, i.e., a user to interact with them without using the added software.

The applicative manages the authentication by means of username and password. The used technology exploits ActiveX controls realised in Visual C++ as for the communication/processing and in Visual Basic for the user interface.

The main page contains:

1. the main ActiveX control for managing the interactivity with the user and carrying out the local processing of the data sent by the server.

2. the cartographic ActiveX control provided with a vectorial editor for:

   A) Visualising the ortophotos: at each change of the framed region (zoom, pan) through a request by means of http protocol to the raster motor. The dimensions of the available cartography do not affect the performances, since only one image of the dimensions of the visualisation window is transmitted each time by the main computer to the local device.

B) Drawing a layout by means of digitization.

C) Digitizing a set of sections, according to various modes.

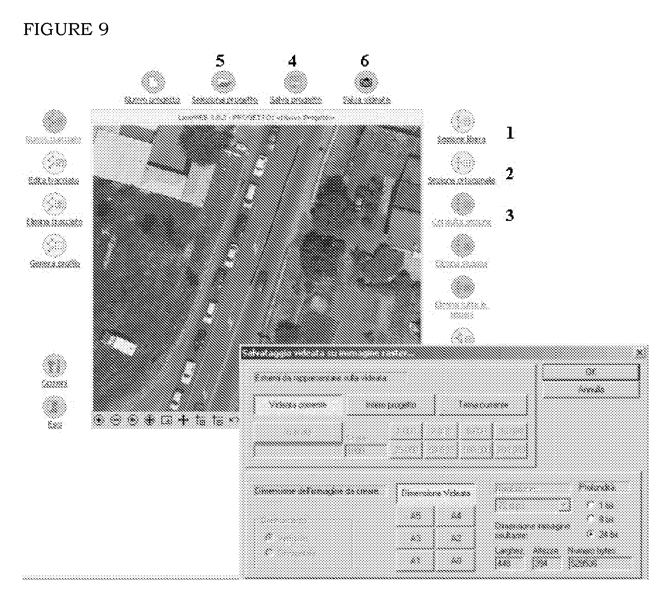

- Free section, by singling out a straight line section in any area (point 1 of figure 9 indicates how, through the user interface, a new free section can be created).

- Section orthogonal to the layout in a point manually singled out, of pre-designable width (point 2 of figure 9 indicates how, through the user interface, a new orthogonal section can be created).

- Sections orthogonal to the layout automatically generated with pre-designable terminable equidistance and pre-designable width.

- Automatic numeration of the sections which cross the layout.

D) Automatically generating the so called talweg as joining some minimum points of the sections defined along the layout.

E) Singling out critical sections for the rate of the waterways, i.e. having area lower than a threshold allotted according to the ratio between the same and the water outflow speed (point 3 of figure 9 indicates how, through the user interface, an already memorised section can be singled out in the central computer).

F) Saving the design, i.e. the set of layouts and sections (point 4 of figure 9 indicates how, through the user interface, a design already memorised in the central computer can be singled out).

G) Modifying the processing of a beforehand saved design (point 5 of figure 9 indicates how, through the user interface, a design already saved in the central computer can be detected).

H) Saving the current cartographic display in a image file (point 6 of figure 9 indicates how, through the user interface, the current display can be saved).

3. The ActiveX control for the communication via socket with the 3D motor. When starting the client application this component automatically connects to the socket of the 3D motor. For generating each 3D print-out, the main ActiveX control uses this component to send to the main computer a request containing the lost of the 2D coordinates in correspondence of which the elevation is to be obtained. The main computer responds with a message containing the list of the elevations.

The 3D prints-out (profiles and sections) are visualised in a pop-up window, which allows to:

- visualise the altimetric graphic by performing zoom and pan

- insert intermediate points (candles) and any progressive

- save what has been visualised in a DXF file

- in the case of the layout profile, automatically generating in the 2D design of the main page some orthogonal sections in correspondence with the intermediate points inserted by the user.

The main computer which supports the computer architecture underlying the above described method is instead constituted by a web server provided with:

1 A 3D motor which manages the publication of the TIN network elevation models, allowing the consultation, by a remote application, of altimetric data by means of geographic queries. The main computer which hosts the 3D server is made of a feasible, always active on the computer, hearing the requests of the peripheral devices. Independently from the complexity of the TIN, the peripheral device-main computer data traffic will be made of only the list of planimetric coordinates and of the corresponding list of elevations in response.

2 A raster cartographic motor for the publication of the ortophotos organised in a continuum of virtually infinite dimensions (tens of GB of images are managed without any difficulty nor loss of performance). The image database is divided in very small units organised in pyramidal levels.

3 A database for managing

- User accounts (username and password)

- Published geographic designs, which can be consulted by one or more registered users.

Moreover, an applicative for the management of the raster data ensures the performances, in terms of data access speed, through a data organisation based on the tassellation of the images and on so called pyramid layers.

In this way, whatever the dimension of the data bank is, the server, to respond to the requests of the user client, processes each time only small portions of data making all the process extremely quick.

As for the data compression, the server is not exclusively based on a particular algorithm, but it leaves the user free to decide each time the technology to be used among the standard ones. This versatility is particularly important since, differently from MrSID and ECW, where the algorithms are of the "Lossy" type, i.e. they deteriorate the image and they thus lose information, which are fundamental, in view of the tolerances imposed by the rules, with this application the user can choose whether to use "lossy" or "lossless" compressions.

Besides the horizontal navigation in a univocal cartographic system, the applicative also allows the vertical navigation among georeferenced cartographies with different reference systems.

The system according to the invention also provides the mapping, continuous in time, of the irregularities of the asphalt and of particular anomalies. In fact, once the road network has been surveyed through the above described method, it is necessary, in particular for motorways and for interurban roads with highly intense traffic, to quickly intervene with ordinary and extraordinary maintenance works.

For determining the typology, the risk and the placement of the deformations one will proceed as described hereafter by using the following components:

1. A portable computer;

2. A specific applicative installed in said portable computer;

3. A "GPS" device;

4. An odometer, i.e. a device used for measuring the distance run by a moving vehicle.

The applicative, besides availing itself of the reference cartography being georeferenced and organised as previously described, associates keyboard controls with a database wherein all the various anomalies are coded. As an alternative, it is possible to carry out this survey also in the absence of cartography. Moreover, where altered or little resistant concrete is signalled, the applicative provides the option of inserting the work in the database and of intervening afterwards with the combined Sonreb surveying method.

In this way, while running a road section, the "GPS" device constantly determines the position of the vehicle, which is thus memorised in the computer, while the operator univoquely identifies a deformation or the degradation of the concrete which will be memorised on the database.

In so doing, a database is generated having associated:

1. the type of anomaly

2. the "wgs 84" coordinates

3. possible notes

Everything is implemented with a management of the maintenances on the basis of the type of deformation, of the mean traffic of the road, etc..

The odometer is necessary during the passages through tunnels, where the "GPS" device is not able to memorise anything, so in the database all the data relative to the anomalies would converge, but not those relative to the position. For obviating this problem in these cases it is useful to employ the data coming from the odometer provided with a tachometric encoder.

All these data will be integrated with the "GPRS" methods or by means of upload from cd, from network or from

Ian to the "GIS-WEB" system as all the other above described data.

Once the anomalies of the asphalt are mapped an index of intervention priority can be drawn on the basis of a specific applicative.

With the aim of evaluating the compression resistance of the concrete in situ, the use of the above cited "Sonreb" method is provided, through the combination of two values, the longitudinal speed of the ultrasonic waves and the rebound sclerometric index.

The advantages of the method derive from the simultaneous use of sclerometer and ultrasounds; in fact the combination of the values obtained by such controls allows the nullification of the influence of the humidity and of the concrete seasoning, since these parameters have, with equal effective resistance to compression, an opposite effect on rebound index and propagation speed of the ultrasounds.

The combination also allows the reduction, with respect to the ultrasounds, of the influence of the inert magnitude and nature, of the cement dosing and type and of the possible additive used for the concrete gush.

Once the rebound indexes and the ultrasonic speeds have been experimentally determined, the pair of obtained values is reported on a cartesian diagram, where the abscissas report the sclerometric indexes and the ordinates the speed.

The compression resistances (Rck), obtained with the combined method, have been surveyed by means of the following relation which analytically expresses the trends of the isoresistance curves, experimentally determined on standard concrete specimens, whereon the values of the ultrasonic speeds and of the rebound index have been first surveyed and, afterwards, the compression breakage tests have been carried out:

$$R_c \ (N/mm^2) = 7.695 \times 10^{-11} \times Im^{1.4} \times V^{2.6} \ .$$

Where: Im is the sclerometric index and V is the ultrasonic speed.

The values of the sclerometric indexes, of the ultrasonic speeds and of the possible obtained compression resistances are reported in the following table n. 1.

Table 1 Possible resistance of sonreb method

| ORDER N. | STRUCTURE | REBOUND | SPEED | RESISTANCE |
|---|---|---|---|---|
| | | Im | Vm (m/s) | Rc (N/mmq) |
| 1 | Beam n. 1 | 46,4 | 2925 | 23,5 |

According to the type and to the degree of anomaly and deformation, the managing authority, if owner or tenant of the maintenance means fleet, can, thanks to the software applicative, manage the interventions on the basis of the priorities and of the availability and vicinity of the vehicles. In fact all the above motor vehicles will be localised in cartography thanks to an apparatus GPS and GSM, which surveys the latitude and the longitude of the vehicle in the WGS84 coordinate system and it transmits them by means of a data GSM board to the management and control server, equipped with GSM modem. The position of the means is therefore visualised in real time, during a network connection, on the base cartography, and it is further possible to consult, in a second time, the path history.

The method according to the invention also provides an analysis of the acoustic pollution generated by the vehicular traffic along the road network, by using an applicative installed in the computer. Such applicative, taking into account the digital model of the lend, of the works and of the vegetation, applies a calculation for simulating the intensity of the sound and surveying the isophonic curves before and after the realisation of stratagems such as for example sound absorbing barriers.

This applicative calculates the intensity of the sound for points being spaced from one another at the desired distance and being distributed along linear sections, orthogonal to the road axis and also spaced from one another at the desired distance.

On the basis of the punctual dispersion of the above values, the applicative determines the distribution of the isophonic curves by endowing them with different colours according to the intensity of the sound, this is carried out by means of suitable mathematical functions available in the literature.

The resulting print-out is compared with data derived from the national rules and when it exists with the local one, thus providing a useful support in the singling out of the critical sections and in the choice of the mitigating works.

The applicative allows to quickly estimate the acoustic pollution in all the land surrounding the road network besides allowing the simulation of the acoustic pollution for different types of projects and barriers also calculating complex situations, such as surveyed and trenches to be realised.

In collaboration with the security forces such as the Metropolitan Police, Motorway Police and Carabinieri, the precise localisation of the accidents referred to each road is provided. With the help of high resolution digital images, of the digital model of the land and of the earth shot digital clip, a suitable analysis of the places and the singling out of possible environmental concauses is provided, besides an accurate analysis of the visibility in the curves.

The many particular advantages of the invention are hereafter listed:

a. the topographic survey with scanner laser from the helicopter ensures the respect of the severe tolerances provided by the Decree allowing the errors in the measure of the road width (carriageway and side) in the tolerance of ten kilometres. The measure is provided at each variation of width of the road higher than the indicated precision.

b. the topographic survey from the helicopter and the automatic processing of profiles and sections on a digital model of the land ensure a quick performance of the work.

c. the equipment held by the surveying technicians, i.e. notebook, digital photo camera, GPS, dedicated software and applicatives for the management of the ortophotos of the surveyed district, make it easy: the operations of earth survey; the orientation of the technicians in little familiar places or regions; the structured and organised pick-up of the information by means of a routine of quick preselection of the objects; the pick-up of the observations also in case of strong wind, which usually complicates the reporting in situ of the information on paper sheets.

d. each surveying technician will be responsible of the insertion in the portable computer of the surveyed information, therefore he will have the possibility of immediately realizing the possible incompleteness of the surveyed data or of possible incongruities.

e. the realisation of a single database managed in internet, will simplify the coordination operations of the works, offering the effective current status of the works in real time.

f. Through the allotment of a "user name" and of a "password" also the work employing authority will be updated about the effective current status of the works in real time.

The method and the device according to the invention thus solve the technical problem and they allow to prepare and to provide, in an efficient and quick way, a data bank for the formation of a Road Registry.

Moreover, the method according to the invention also allows to manage in an excellent way:

- the analysis of the acoustic pollution generated by the vehicular traffic along the road network, by means of a software applicative which, taking into account the digital model of the land, of the works and of the vegetation, applies calculation algorithms capable of representing the sound dispersion in the environment;

- the realisation of a survey system of faults and anomalies on the road elements,

- the management of the vehicles interested in the interventions of the road network maintenance, by means of software applicatives and systems developed with GPS and GSM technology, according to the availability and placement of the means and to the dangerousness of the deformations and of the anomalies of the road elements;

- a precise localisation of the road accidents and analysis of the environment.

In summary, the data derived by the method described by the present invention for the methodological implementation of the road safety, can be summarised in:

1. plani/altimetric survey of the road body, by distinguishing the carriageway, the road side, the sidewalk, the cycling track and the traffic island;

2. cross sections of the road body and of the elements of its concern, with centimetric pitch along the profile trend and with maximal error in the cross inclination contained in 0.5 centesimal degrees. The distance between the sections along the road axis is, to the administration discretion, metric and variable;

3. colour digital clip of the road network shot with earth camera. It will have to be put in relation with the geographic coordinates of each point of the road axis and therefore each single frame will have the possibility of being video recalled by the planimetric layout of the road in the cartography, allowing the user the perspective view, in the direction of the running sense, from each point of the road axis;

4. georeferenced information relative to the *traffic signals* which can be visualised through masks which will have the possibility of being selected directly in cartography. In particular each single mask will have to contain: type of support; height of the first earth signal; distance from the road edge; status of the support maintenance; type and dimension of the traffic signal; class of the film; overall status of the signal; firm and year of manufacture; number and date of ruling; photo;

5. georeferenced information relative to the *commercial advertising* which can be visualised through masks which will have the possibility of being selected directly in cartography. In particular each single mask will contain: dimension and characteristics of the panel; height of the panel from earth; distance from the road edge; authorisation; expiry of the authorisation; advertising firm the concession is relied on; photo;

6. georeferenced information relative to the *petrol stations* along the surveyed road network which can be visualised through masks which will have the possibility of being selected directly in cartography. In particular each single mask will contain: name of the firm managing the facility; address and telephone number; photo;

7. georeferenced information relative to the *public transport stops* which can be visualised through masks which will have the possibility of being selected directly in cartography.

The above information integrated in the Road Information System, allow to evaluate the visibility of the traffic signals and provide the user with useful information for the analysis of the dynamics and of the frequency of the accidents, making it possible the programming and the provision of the maintenance and substitution costs of the elements under examination, it is thus possible to pass very quickly from a type of maintenance "on damage or misfunctionality" to a programmed one.

The consultation of the crossed sections united with the cartographic representation of the surveyed area allows to evaluate the prevailing geometric characteristics of the road network which, together with the weather factors, the type of economic structure and instalments, determine the effective consistency of the "environment risk conditions" under which the road accidents occur. The information relative to the sections along the so called guard big dips adjacent to the road network will allow evaluations on the hydrogeologic status and of the hydraulic rate and the environment risks related to a bad functioning thereof.

The integration of the cartographic support with the digital clip together with the possibility of simultaneously recalling all the above listed punctual information is of particular interest; i.e. the cross sections of the road body and all the information relative to the Road Registry as well as to the traffic signals, commercial advertising, public transport stops and petrol stations.

The internet dynamic consultation allows each user or worker responsible of the road maintenance or safety to operate or implement in a multidisciplinary mode on a single data bank.

The site can in fact provide an interface which can be filled in for example by authorities as the Carabinieri Force, Motorway Police, Metropolitan Police, Province and Region, singling out for each of them:

- place, date and time of the accident;

- nature of the accident (among vehicles or between vehicle and pedestrian; among vehicles being both running or between a vehicle being running with a stationary one, etc.);

- typology of the accident (pile-up; frontal; side; road exit);

- deceased and injured;

- damages to things;

- etc.

The information contained in the database are thus put into relation with the available digital cartography making it possible the geographical localisation of the accidents.

The method according to the invention thus has the advantage of allowing a plurality of users to interactively interact on a same and homogeneous survey of the land, thus allowing to process profiles, sections, areas, etc. without having to use any specific computer instrument for this kind of applications as for example a CAD or similar products.

Moreover, the method according to the invention allows to operate on high resolution, precise surveys, which necessarily results in a huge amount of data which would make critical the loading and the processing of the information also by specific computer instruments, exactly such as CAD commonly used for the design. Instead, the method of the invention makes it possible the processing and the design of the land images by means of Internet also with the treatment of huge amounts of data.

**Claims**

1. Method to analyse the acoustic pollution generated by the vehicular traffic along a road network **characterized by** comprising the steps of taking into account a digital model of the land and calculating the intensity of the environment sound in a plurality of points of said digital model of the land.

2. Method according to claim 1 further comprising the step of surveying isophonic curves for reducing the sound level by sound absorbing barriers.

3. Method according to claim 1 wherein said intensity of the sound is calculated in points spaced at predetermined distance and distributed along linear sections.

4. Method according to claim 3 wherein said linear sections are spaced at a predetermined distance.

5. Method according to claim 3 or 4 wherein said linear sections are orthogonal to an axis of a road of said network.

6. Method according to claim 2 comprising the step of determining the distribution of the isophonic curves, said curves being endowed in a "print-out" with different colours corresponding to the intensity of sound.

7. Method according to claim 6 comprising the step of -comparing said "print-out" with data derived from predetermined rules and -singling out critical sections.

8. Method according to any of the previous claims wherein at least one survey from above through LIDAR technology is provided with obtainment of a plurality of tri-dimensional coordinates x, y, z and a plurality of digital images of the land or ortophotos.

9. Method according to claim 8 comprising the step of differentiating structural elements on the land and elevated points belonging to the land itself.

10. Method according to claim 9 comprising the step of superimposing said digital images above said digital model of the land.

11. Method according to claim 10 comprising the step of integrating the information contained in said digital images by means of a real time survey on the land of said structural elements or of further structural elements, by means of a portable survey, transmitting said digital images to a central processing device and subsequent transmitting said digital images and/or exemplifications thereof on demand of peripheral devices connected to the central processing device.

12. Method according to claim 10, **characterised by** comprising a step of photo-interpretation of said digital images by means of video digitisation of the land and of functional and structural elements placed thereon and by means of association of graphic symbols with each image.

13. Method according to claim 11, **characterised in that** said survey on the land is carried out by availing of a GPS instrument allowing an easy geographical orientation and positioning according to the photographic images available in said portable survey.

14. Method according to claim 11, **characterised in that** said survey on the land is carried out by means of a digital photo camera provided at each portable survey for carrying out photographic surveys by downloading images relative to said structural elements.

15. Method according to claim 14, **characterised in that** a tri-dimensional digital model of the land under examination is provided in said portable survey in order to process sections, profiles and running simulations.

FIGURE 1

FIGURE 2

FIGURE 3

FIGURE 4

FIGURE 5

FIGURE 6

FIGURE 7

FIGURE 8

```
                          ┌─────────────────────┐
                          │      CALAMITY       │
                          └──────────┬──────────┘
                                     │
                                     ▼
              ┌──────────────────────────────────────────┐
              │          Laser scanner survey            │
              └────┬────────────────────────────────┬────┘
                   │                                 │
                   ▼                                 ▼
      ┌──────────────────────┐         ┌──────────────────────┐
      │ Surveyed        data │         │ Orthorectification   │
      │ extrapolation    and │         │ of    the     "true  │
      │ filtration           │         │ orthofoto" images    │
      └──────────┬───────────┘         └───────────┬──────────┘
                 │                                  │
                 │    ┌──────────────────────┐      │
                 └───►│ "Project" preparation │◄────┘
                      │ and WEB publication   │
                      └───────────┬───────────┘
                                  │
                                  ▼
                   ┌──────────────────────────────┐
                   │  Remote available functions   │
                   └───────────────┬──────────────┘
                                   │
                                   ▼
                        ┌─────────────────────┐
                        │ Section and         │
                        │ profile processing  │
                        └──┬──────────────┬───┘
                           │              │
                           ▼              ▼
      ┌──────────────────────────┐   ┌──────────────────────────┐
      │ Planimetric   progressive│   │ Talweg processing and    │
      │ definition               │   │ section areas processing │
      └──────────────────────────┘   └──────────────────────────┘
```

FIGURE 9

FIGURE 10

**Europäisches Patentamt**
**European Patent Office**
**Office européen des brevets**

## EUROPEAN SEARCH REPORT

Application Number

EP 10 17 4525

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SERVIGNE S ET AL: "First specifications of an information system for urban soundscape", MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, vol. 2, 7 June 1999 (1999-06-07), pages 262-266, XP010519395, DOI: DOI:10.1109/MMCS.1999.778356 ISBN: 978-0-7695-0253-3 * abstract; figure 3 * * paragraphs [02.1], [02.1], [03.3], [03.4] * | 1-15 | INV. G06T17/50 G09B29/10 |
| A | FR 2 831 956 A1 (BOUBEZARI MOHAMMED [PT]) 9 May 2003 (2003-05-09) * abstract; figures 5,6 * * page 5, lines 3-15 * | 1-15 | |
| A | PANDYA G H: "Urban Noise - A need for acoustic planning", ENVIRONMENTAL MONITORING AND ASSESSMENT 2001 KLUWER ACADEMIC PUBLISHERS NL, vol. 67, no. 3, 2001, pages 379-388, XP002613952, DOI: DOI:10.1023/A:1006326705915 * abstract * * paragraphs [004.], [006.] * | 1-15 | TECHNICAL FIELDS SEARCHED (IPC) G06T G09B G01V G01C |

The present search report has been drawn up for all claims

| Place of search | Date of completion of the search | Examiner |
|---|---|---|
| Munich | 16 December 2010 | Casteller, Maurizio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 4525

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2010

| Patent document cited in search report | Publication date | Patent family member(s) | Publication date |
|---|---|---|---|
| FR 2831956 A1 | 09-05-2003 | NONE | |